(19) Europäisches Patentamt
European Patent Office
Office européen des brevets

(11) **EP 1 369 518 B1**

(12) **EUROPEAN PATENT SPECIFICATION**

(45) Date of publication and mention
of the grant of the patent:
**29.08.2012  Bulletin 2012/35**

(51) Int Cl.:
*D04H 3/14* (2012.01)        *D01F 8/06* (2006.01)
*D04H 3/018* (2012.01)

(21) Application number: **02716405.2**

(22) Date of filing: **28.01.2002**

(86) International application number:
**PCT/JP2002/000585**

(87) International publication number:
**WO 2002/061192 (08.08.2002 Gazette 2002/32)**

(54) **NON-WOVEN FABRICS OF WIND-SHRINK FIBER AND LAMINATES THEREOF**

VLIESSTOFFE AUS SCHRUMPFFASERN UND LAMINATE DARAUS

TISSUS NON TISSES DE FIBRES CREPEES PAR ENROULEMENT ET STRATIFIES CORRESPONDANTS

(84) Designated Contracting States:
**AT BE CH CY DE DK ES FI FR GB GR IE IT LI LU MC NL PT SE TR**

(30) Priority: **29.01.2001  JP 2001019734**
**18.07.2001  JP 2001217995**

(43) Date of publication of application:
**10.12.2003  Bulletin 2003/50**

(73) Proprietor: **Mitsui Chemicals, Inc.**
**Tokyo (JP)**

(72) Inventors:
• **KISHINE, Masahiro,**
**MITSUI CHEMICALS, INC.**
**Chiyoda-ku, Tokyo 100-6070 (JP)**
• **TAKESUE, Kunihiko,**
**MITSUI CHEMICALS, INC.**
**Yokkaichi-shi, Mie 512-8054 (JP)**

• **MORIMOTO, Hisashi,**
**MITSUI CHEMICALS, INC.**
**Yokkaichi-shi, Mie 512-8054 (JP)**

(74) Representative: **Wills, Andrew Jonathan et al**
**Mewburn Ellis LLP**
**33 Gutter Lane**
**London**
**EC2V 8AS (GB)**

(56) References cited:
EP-A- 0 894 875           WO-A-00/28123
WO-A-98/29586           WO-A-99/14415
GB-A- 1 134 924           JP-A- 8 269 857
JP-A- 8 325 916           JP-A- 9 059 823
JP-A- 10 088 459          JP-A- 10 226 925
JP-A- 11 001 857          JP-A- 2000 328 420
JP-A- 2001 140 158        US-A- 3 505 164
US-A- 3 509 013

**Description**

TECHNICAL FIELD

The present invention relates to a nonwoven fabric comprising crimped conjugate fibers. More particularly, the invention relates to a nonwoven fabric composed of crimped conjugate fibers, which has excellent bulkiness and softness as well as excellent spinnability and fuzzing resistance, and to a nonwoven fabric laminate using the same.

TECHNICAL BACKGROUND

In recent years, nonwoven fabrics are used for a wide variety of applications because of their excellent gas permeability and softness and are finding an increasing number of applicable fields. Reflecting this background, nonwoven fabrics are being called on to have a variety of properties satisfying the requirements depending upon respective applications and to have improved properties.

For example, nonwoven fabrics used as substrates of sanitary goods such as disposable diapers, sanitary napkins, or poultice materials, etc. are required to have water impermeability and possess excellent permeability. In addition, nonwoven fabrics are further required to have excellent extensibility, depending upon place to be used.

More specifically, sanitary goods such as disposable diapers have such a structure that an absorbing material for absorbing and retaining body fluid is covered with a top sheet located inside an absorbable article and a back sheet outside the absorbable article and enclosed therein. The top sheet, which is in contact with skin, is required to have the function of permeating discharged body fluid therethrough and absorbing/retaining it in the absorbing material inside and at the same time, causing no backflow. On the other hand, the back sheet is required to have water impermeability to prevent leakage of body fluid absorbed in the absorbing material inside and have appropriate moisture permeability to prevent from getting stuffy, permeate the inner moisture of absorbable article therethrough and get scattered outside. Furthermore, the back sheet forms the outer surface of sanitary goods and is thus required to have excellent feeling and good touch.

In order to improve the feeling or touch of nonwoven fabrics, it is effective to make nonwoven fabrics bulky. One measure of the improvement includes crimping fibers, from which nonwoven fabrics are made. Nonwoven fabrics made from crimped fibers are excellent also in extensibility. For example, Japanese Patent Laid-Open Application No. 9-78436 discloses extensible nonwoven fabrics made from eccentric core-sheath type crimped conjugate fibers, which are composed of polyethylene resin A having a melt flow rate (MFR) of 5 to 20 g/10 min and polyolefin resin B having a larger MFR by approximately 10 to 20 g/10 min than that of polyethylene resin A and these resins are blended in a weight ratio (A/B) of 10/90 to 20/80.

Also, Japanese Patent Laid-Open Application No. 11-323715 discloses spun-bonded nonwoven fabrics of eccentric core-sheath type crimped conjugate fiber filaments, which are composed of the core comprising a propylene-based polymer (A) having a melt flow rate (MFR A, as determined at a load of 2.16 kg at 230°C in accordance with ASTM D1238) of 0.5 to 100 g/10 min and the sheath comprising a propylene-based polymer (B) having a melt flow rate (MFR B, as determined at a load of 2.16 kg at 230°C in accordance with ASTM D1238) that satisfies the relationship of MFR A/MFR B ≧ 1.2 or MFR A/MFR B ≦ 0.8, indicating that the nonwoven fabrics are used as the top sheet for absorbable articles having excellent softness, bulkiness and body fluid absorbability.

These nonwoven fabrics proposed above are prepared by conjugate melt spinning of polymers having different MFR values, i.e., different melt viscosities, but unfortunately these fabrics involve a problem of unstable spinnability since filaments discharged through a spinning nozzle tend to slant.

On the other hand, Japanese Patent Laid-Open Application No. 6-65849 discloses a process for preparing nonwoven fabrics which involves the steps of melt spinning multi-component fibers of first and second polymer components, elongating the spun fibers, cooling the fibers so as to produce latent crimps, activating the latent crimps and forming the crimped fibers in nonwoven webs. In this process, a heat treatment is necessary during spinning for activating the latent crimps. Furthermore, though use of polymers having different melting points as the first and second polymer components is disclosed, its specific disclosure is merely on the combination use of different polymers of a higher melting polypropylene as the first polymer component and a low melting polyethylene as the second polymer component. In this combination, at least only a part of the surface of multi-component fibers is constructed with a low-melting polyethylene so that stable spinnability, resistance to fuzzing of nonwoven fabrics, etc. tend to be lost.

Japanese Patent Laid-Open Application No. 9-24196 further discloses a nonwoven fabric for area fasteners, in which fibers forming the nonwoven fabric are parallel conjugate fibers with fiber components of different thermal shrinkage rates arranged in parallel along the longitudinal thread direction or eccentric core-sheath type conjugate fibers with the core component shifted off-center. According to this proposal, the desired nonwoven fabrics are prepared by making a nonwoven fabric web of latent crimped fiber filament and then subjecting the filament to a relaxation heat treatment at a temperature lower than the melting point of the lowest melting point component in the longer fiber-constituting polymer components thereby to activate the latent crimps. This technique also requires a special apparatus for the heat treatment to prepare a nonwoven fabric composed of crimped conjugate fibers at a high speed in a large scale.

An object of the present invention is to provide a nonwoven fabric comprising crimped conjugate fibers having excellent

WO 00/028123 describes a fabric comprising a bonded non-woven web of crimped a bonded nonwoven web of crimped multicomponent fibers. The multicomponent fibers comprise a first component and a second component wherein said first component comprises polypropylene polymer and said second component comprises a propylene polymer selected from the group consisting of high melt-flow rate polypropylenes, low polydispersity polypropylenes, amorphous polypropylenes and elastomeric polypropylenes. The components may be arranged in substantially distinct zones within the cross-section of the filament that extend substantially continuously along the length of the filament. The components may be arranged side-by-side or an eccentric sheath/core arrangement. For crimpable bicomponent fibers, the respective polymer components can be present in ratios (by volume) of from about 85/15 to about 15/85. In certain embodiments, one of the polymer components desirably has a melting point at least about 10° C lower than that of the other component.

WO 98/029586 describes a heat-fusible composite fiber comprising a sheath component of a crystalline propylene copolymer resin having a low melting point and a core component of a crystalline polypropylene resin having a higher melting point. In certain embodiments, the high-melting-point resin has a melting point of 157°C or above. In certain embodiments, the low-melting-point resin has a melting point of 110 to 150°C. The weight ratio of sheath and core components is preferably within a range between 20/80 and 70/30.

JP 09 059823 describes a conjugated fiber which has high crimpability and can give high bulkiness to nonwoven fabrics. The fiber comprises an isotactic propylene (IPP) sheath and a syndiotactic propylene (SPP) core in an eccentric sheath-core conjugation. The ratio of SPP to IPP in the conjugated fiber is preferably 1:3, and most preferably 1:1.

JP 08 269857 describes a nonwoven fabric blended with conjugate fiber staples. Each fiber is made up of A component as sheath and B component as core with its melting point ~20°C higher than that of the A component. The A component consists of a polypropylene containing approximately 55 wt % of syndiotactic pentad component and covers at least 60 % of the periphery of the cross-section of the conjugate fiber. bulkiness and softness as well as excellent spinnability and fuzzing resistance, which can be produced by a conventional melt spinning. Another object of the present invention is to provide a nonwoven fabric laminate using said nonwoven fabric, to which water impermeability and surface smoothness are further imparted.

DISCLOSURE OF THE INVENTION

According to the present invention, there is provided a nonwoven fabric of a crimped conjugate fiber comprising a first propylene-based polymer component and a second propylene-based polymer component, in which

the first and second propylene-based polymer components are arranged to have substantially different zones in the cross-section of the crimped conjugate fiber and are extended continuously along the longitudinal direction of the crimped conjugate fiber,

the second propylene-based polymer component forms at least a part of the peripheral surface continuously along the longitudinal direction of the crimped conjugate fiber,

the melting point of the first propylene-based polymer component is higher by at least 24°C than the melting point of the second propylene-based polymer component as determined by a differential scanning calorimeter (DSC), and

the ratio of the first/second propylene-based polymer components (by weight) is in the range of 20/80 to 5/95, wherein the crimped conjugate fiber is an eccentric core-sheath conjugate fiber comprising the first propylene-based polymer component as the core and the second propylene-based polymer component as the sheath, and the number of crimps is per 25 mm or more and the first propylene polymer is a propylene homopolymer, the second propylene polymer is a propyleneethylene random copolymer, having 5 to 10 mol % of ethylene unit and the first and second propylene polymers MFR of 20 to 200 g/10 min.

The ratio of the second to first propylene-based polymer components described above in the melt flow rate (MFR: measurement temperature at 230°C under a load of 2.16 kg), as determined in accordance with ASTM D1238, is preferably in the range of 0.8 to 1.2 (the second component/the first component).

It is also preferred that the crimped conjugate fiber constituting the nonwoven fabric has at least two melting point peaks for the crimped conjugate fiber as determined by DSC on the first run, and the area for the lowest melting point peak is not smaller than the area for each of the other higher melting point peaks.

In the present invention, the nonwoven fabrics composed of the crimped conjugate fibers are preferably fused by heat embossing..

Preferably, the embossing above is carried out under conditions of an emboss area percentage from 5 to 20% and a non-emboss unit area of at least 0.5 mm$^2$.

It is more preferred that the nonwoven fabric of the crimped conjugate fibers is a spun-bonded nonwoven fabric prepared by spun-bonding process.

According to the present invention, there is provided a nonwoven fabric laminate of at least two-layer structure, at least one of which layers is a nonwoven fabric of the crimped conjugate fibers described above.

In the present invention, a preferred embodiment is that the nonwoven fabric laminate comprises a nonwoven fabric composed of the crimped conjugate fibers, in which a plurality of nonwoven fabrics having different crimping degrees are laminated.

According to the present invention, it is a preferred embodiment of the invention that in the nonwoven fabric laminate at least one other layer making the laminate is a layer of a melt-blown nonwoven fabric prepared by a melt-blowing process.

According to the present invention, it is also a preferred embodiment of the invention that in the nonwoven fabric laminate at least one other layer making the laminate is a layer of a spun-bonded nonwoven fabric comprising microfibers prepared by a spun-bonding process.

According to the present invention, it is also a preferred embodiment of the invention that in the nonwoven fabric laminate at least one other layer making the laminate is a permeable film layer.

According to the present invention, there is provided a disposable diaper using the nonwoven fabric of crimped conjugate fibers or the nonwoven fabric laminate described above.

According to the present invention, there is provided a sanitary napkin using the nonwoven fabric of crimped conjugate fibers or the nonwoven fabric laminate described above.

## BRIEF DESCRIPTION OF THE DRAWINGS

FIG. 1 is a part of the emboss pattern used in EXAMPLES 1 through 6 and COMPARATIVE EXAMPLES 1 through 5, which will be later described.

FIG. 2 is a part of the emboss pattern used in EXAMPLE 7 later described.

FIG. 3 is a part of the emboss pattern used in EXAMPLE 8 later described.

FIG. 4 is a melting point measurement curve determined by DSC on the first run, with respect to the crimped conjugate fiber obtained in EXAMPLE 2, which will be later described.

FIG. 5 is a melting point measurement curve determined by DSC on the first run, with respect to the crimped conjugate fiber obtained in EXAMPLE 4, which will be later described.

FIG. 6 is a melting point measurement curve determined by DSC on the first run, with respect to the crimped conjugate fiber obtained in COMPARATIVE EXAMPLE 4, which will be later described.

## BEST MODE FOR CARRYING OUT THE INVENTION

The nonwoven fabric of the crimped conjugate fibers (hereinafter sometimes merely referred to as conjugate fibers) in accordance with the present invention and the nonwoven fabric laminate using the same will be described below in detail.

The crimped conjugate fibers used in the present invention comprise a first propylene-based polymer component and a second propylene-based polymer component. The first and second propylene-based polymer components are arranged to have substantially different zones in the cross-section of the crimped conjugate fibers and are extended continuously along the longitudinal direction of the crimped conjugate fibers; the second propylene-based polymer component forms at least a part of the peripheral surface, preferably at least 50% of the peripheral surface, continuously along the longitudinal direction of the crimped conjugate fibers.

Such a conjugate fiber is specifically a core-sheath type conjugate fiber comprising the first propylene-based polymer as the core part and the second propylene-based polymer as the sheath part, preferably an eccentric core-sheath conjugate fiber with the core/sheath shifted off-center in the cross section of the fiber, and a side-by-side conjugate fiber comprising the first propylene-based polymer part and the second propylene-based polymer part. Herein, the eccentric core-sheath conjugate fiber with the core shifted off-center includes an eccentric type in which the core and sheath parts are off-center and the core part is enclosed in the sheath part, and a parallel type in which the core shifted off-center is not enclosed in the sheath part.

The melting point of the first propylene-based polymer component as determined by a differential scanning calorimeter (DSC) is higher by at least 24°C than the melting point of the second propylene-based polymer component and the ratio of the first/second propylene-based polymer components (by weight) is in the range of 20/80 to 5/95 , which are important requirements. Furthermore, the ratio of the two components (the second component/the first component) described above in the melt flow rate (MFR: measurement temperature at 230°C under a load of 2.16 kg) is preferably in the range of 0.8 to 1.2, more preferably 0.9 9 to 1.1, as determined in accordance with ASTM D1238.

In the present invention, the area ratio of the first propylene-based polymer to the second propylene-based polymer in the cross section of the conjugate fiber is almost equal to the weight ratio in general.

By satisfying the conditions above, the conjugate fiber becomes crimped and the nonwoven fabric composed of the fiber provides an excellent bulky feeling. The number of crimps is at least 70 crimps/25 mm , as measured in accordance with JIS L1015.

A small difference in MFR between the two components results in good spinnability. A preferred spinnability in the present invention refers to such a property that upon spinning the molten polymers through a spinning nozzle, spun filaments are free from fusion and filament break and can be spun stably.

In the present invention, the measurement of a melting point by DSC is performed as follows. Using a device manufactured by Perkin-Elmer Inc., the melting point is measured by filling a sample in a measuring pan, heating once from 30°C to 200°C at a rate of 10°C/min, holding the sample at 200°C for 10 minutes, lowering the temperature to 30°C at a rate of 10°C/min and then elevating the temperature from 30°C to 200°C at a rate of 10°C/min (measurement on the second run).

In the measurement of the conjugate fiber by DSC, the melting point is measured on the first run using the same device by filling a sample in a measuring pan, and elevating the temperature from 30°C to 200°C at a rate of 10°C/min.

According to this method for measurement, the melting point is obtained as the peak on the endothermic curve, whereby both the melting point and the melting point peak area can be determined. In the present invention, it is preferred that at least two melting point peaks are present for the conjugate fiber determined by the latter method on the first run and the area for the lowest melting point peak is not smaller than the area for the other higher melting point peaks. When the two melting point peaks overlap one another, a peak excluding the affect of the other peak is estimated from the figure of the highest peak to determine the area and the estimated area can be compared to the area for the other peak.

The first propylene-based polymers is a propylene homopolymer and the second propylene-based polymer is a propylene-ethylene random copolymer, containing 5 to 10 mol% of ethylene unit and the first and second propylene-based polymers have a MFR of 20 to 200 g/10 min.

A combination of a propylene homopolymer as the first propylene-based polymer and a random copolymer of propylene and a small amount of ethylene as the second propylene-based polymer containing not greater than 10 mol % is advantageous especially because the nonwoven fabric composed of the conjugate fibers having excellent bulkiness and good softness can be obtained. The content of the ethylene units can be determined by a conventional method for measuring $^{13}$C-NMR spectrum.

Preferably, the melting point of the first propylene-based polymer is in the range of 120 to 175°C and the melting point of the second propylene-based polymer is in the range of 110 to 155°C. A difference in the melting point between the two polymers is at least 24°C, as stated above.

The propylene-based polymers described above can be produced using a highly stereospecific polymer catalyst.

The nonwoven fabric composed of the crimped conjugate fiber described above may be obtained by conventional conjugate melt spinning without requiring any special device, and in particular, it is preferable that said nonwoven fabric is a spun-bonded nonwoven fabric produced by a spun-bonding process because of its excellent productivity.

The spun-bonded nonwoven fabric can be produced as follows. The first propylene-based polymer, which forms one zone of the conjugate fiber, and the second propylene-based polymer, which forms another zone of the conjugate fiber, are molten separately in extruders. Each molten polymer is discharged from a spinneret with bi-component fiber spinning nozzles constructed to discharge each molten polymer so as to form a desired fiber structure. The filaments thus spun are cooled with a cooling air. Then the filaments are given tension by means of stretching air to have a desired fineness. Next, the spun filaments are collected on a collection belt to deposit on a determined thickness and then subjected to the processing of tangling. Examples of the tangling processing include a method in which the fibers are entangled by means of a needle punch, water jet, ultrasonic wave, etc.; a method in which the fibers are fused by heat embossing or by passing hot air through them.

In the present invention, the nonwoven fabric is preferably prepared by heat fusion through the processing of embossing. The emboss processing is carried out preferably under the conditions of an emboss area percentage of 5 to 20%, more preferably 5 to 10%, and a non-emboss unit area of at least 0.5 mm$^2$, more preferably 4 to 40 mm$^2$. Herein, the non-emboss unit area is used to mean the largest area of a square which inscribes the emboss parts at the smallest unit of the non-emboss part which is entirely surrounded by the embossed parts. When the nonwoven fabric is embossed under the conditions set forth above, the nonwoven fabric can be made more bulky while maintaining its strength required. The emboss area percentage and the non-emboss unit area can be varied by changing an emboss pattern.

The fineness and basis weight of the nonwoven fabric are appropriately chosen depending upon use but it is generally preferred that the fineness is in the range of 0.5 to 5.0 deniers, especially 0.5 to 3.0 deniers, and the basis weight is in the range of 3 to 100 g/m$^2$, especially 7 to 30 g/m$^2$.

In the conjugate fiber of the present invention, other components may also be incorporated, in addition to the propylene-based polymers, as needed to the extent not impairing the objects of the invention. Examples of these components include known heat resistant stabilizers, weatherproof stabilizers, various other stabilizers, antistatic agents, slip agents, anti-blocking agents, anti-fogging agents, lubricants, dyes, pigments, natural oil, synthetic oil, waxes, etc.

Examples of stabilizers include anti-aging agents such as 2,6-di-t-butyl-4-methylphenol (BHT), etc.; phenol type antioxidants such as tetrakis[methylene-3-(3,5-di-t-butyl4-hydroxyphenyl)propionate]methane, an alkyl ester of β-(3,5-di-t-butyl-4-hydroxyphenyl)propionic acid, 2,2'-oxamidobis [ethyl-3-(3,5-di-t-butyl-4-hydroxyphenyl)propionate, etc.; fatty acid metal salts such as zinc stearate, calcium stearate, calcium 1,2-hydroxystearate, etc.; polyvalent alcohol fatty acid esters such as glycerin monostearate, glycerin distearate, pentaerythritol monostearate, pentaerythritol distearate, pentaerythritol tristearate, etc.; and the like. These stabilizers may also be used in combination.

Examples of lubricants are oleic amide, erucic amide, stearic amide, etc.

The conjugate fiber may also contain fillers such as silica, diatomite, alumina, titanium oxide, magnesium oxide, pumice powders, pumice balloons, aluminum hydroxide, magnesium hydroxide, basic magnesium carbonate, dolomite, calcium sulfate, potassium titanate, barium sulfate, calcium sulfite, talc, clay, mica, asbestos, calcium silicate, montmorillonite, bentonite, graphite, aluminum powders, molybdenum sulfide, etc.

The propylene-based polymers and the other optional components used depending on necessity can be blended by known methods.

The nonwoven fabrics composed of the crimped conjugate fibers obtained as described above are excellent in bulkiness and softness. In addition, the nonwoven fabrics have excellent spinnability and good resistance to fuzzing, since polyethylene is not used as the second component for constituting at least a part of the fiber surface. For this reason, the nonwoven fabrics provide excellent productivity, especially with less fuzzing in emboss processing, which enables high speed processing.

The nonwoven fabric laminate in accordance with the present invention comprises at least two-layer structure and at least one of the layers is made of the nonwoven fabric composed of the crimped conjugate fiber. The layers that constitute the laminate may all be composed of the crimped conjugate fiber nonwoven fabric alone, or may be composed of one or more layers of the crimped conjugate fiber nonwoven fabric of the invention and one or more of the other layers. Such a laminate can be produced by in-line laminating the layers prior to the entangling processing of the nonwoven fabric, or by off-line laminating after the entangling processing.

In the in-line lamination, a nonwoven fabric layer is preferred as the other layer to be laminated. Examples of the other layer include layers composed of a spun-bonded nonwoven fabric, a melt-blown nonwoven fabric, a nonwoven fabric obtained by carding process, etc. Preferably, these layers are piled on the nonwoven fabric of the crimped conjugate fiber prior to the processing of entangling and heat fused under the embossing conditions described above to integrally form a laminate. Accordingly, various polymers can be employed as materials for the nonwoven fabrics to be laminated in-line, so long as nonwoven fabrics are heat fusible with the nonwoven fabric composed of the crimped conjugate fiber. Of course, a nonwoven fabric composed of the crimped conjugate fibers having different crimping degrees may also be laminated in a similar manner.

Examples of the polymer that can be used for materials of the nonwoven fabric as the other layer above in the nonwoven fabric laminate of the present invention include polyolefin, polyester, polyamide, polyurethane, etc.

Specifically, fibers of polypropylene, polyethylene or a blend thereof are preferred as the polyolefin that are usable as materials for the nonwoven fabric. It is particularly preferred to use polypropylene fibers, in terms of spinnability, heat resistance and heat fusion to the nonwoven fabric composed of the crimped conjugate fiber.

Specifically, those similar to the first or second propylene-based polymer, which constitutes the crimped conjugate fiber, can be used as the polypropylene. Particularly when using melt-blown nonwoven fabrics, it is preferred to use those having a melt flow rate of 30 to 3000 g/10 min, especially about 400 to about 1500 g/10 min. It is also preferred to use those having the ratio Mw/Mn of a weight average molecular weight to a number average molecular weight in the range of 2 to 6.

As the polyethylene that is usable as a nonwoven fabric material for the other layer of the laminate described above, there are, for example, a homopolymer of ethylene (which can be prepared either by the high pressure process or by the low pressure process) and a copolymer of ethylene and other α-olefin. Examples of the other α-olefin in the copolymer include an α-olefin having 2 to 20 carbon atoms such as propylene, 1-butene, 1-pentene, 1-hexene, 1-octene, 1-decene, 3-methyl-1-butene, 3-methyl-1-pentene 3-ethyl-1-pentene, 4-methyl-1-pentene, 4-methyl-1-hexene, etc. These other α-olefins may be copolymerized alone or at least two of them.

Preferably, the polyethylene described above has a density of 880 to 970 kg/m$^3$, more preferably 910 to 965 kg/m$^3$. Furthermore, its melt flow rate is preferably in the range of 10 to 400 g/10 min, more preferably 15 to 250 g/10 min, as determined at 190°C under a load of 2160 g. Also, its ratio of the weight average molecular weight to the number average molecular weight, i.e., Mw/Mn is preferably in the range of 1.5 to 4.

As the polyester nonwoven fabric material that is usable as the other layer in the laminate described above, there are, for example, an aromatic polyester having excellent strength, rigidity, etc. and a biodegradable aliphatic polyester. Specific examples of the aromatic polyester include polyethylene terephthalate, polytrimethylene terephthalate, polytetramethylene terephthalate, etc. Specific examples of the aliphatic polyester include polycondensates of polyvalent carboxylic acids such as malonic acid, succinic acid, glutaric acid, adipic acid, sebacic acid, dodecanoic acid, malic acid, tartaric acid, citric acid, etc. and polyvalent alcohols such as ethylene glycol, propylene glycol, butanediol, hexanediol, glycerin, trimethylolpropane, etc.; ring-opening polymers of lactides or caprolactones, etc.; polycondensates of hydroxy acids such as lactic acid, hydroxybutyric acid, hydroxyvaleric acid, etc.

Where the nonwoven fabric laminate of the present invention is produced off-line, other layers to be laminated are not particularly restricted, and layers composed of a knitted fabric, a woven fabric, a nonwoven fabric, a film, etc. may be employed. Any materials can be used for these other layers as long as they can be laminated by the following lamination techniques. Such lamination techniques include heat fusion such as emboss processing, fusion by ultrasonic wave, etc., mechanical tangling such as a needle punch or water jet, etc., a technique using adhesives such as a hot melt adhesive, etc., and extrusion lamination when the other layer is in the form of a film.

A preferred embodiment of the nonwoven fabric laminate of the present invention comprises the aforesaid nonwoven fabric (a spun-bonded nonwoven fabric is preferred) of the present invention, which is composed of the crimped conjugate fiber, and a melt-blown nonwoven fabric laminated thereon. According to this layer structure, the nonwoven fabric laminate having both bulky feeling and water impermeability can be obtained. Examples of the layer structure in this case are a two layer structure of spun-bonded nonwoven fabric (crimped conjugate fiber)/melt-blown nonwoven fabric, a three layer structure of spun-bonded nonwoven fabric (crimped conjugate fiber)/melt-blown nonwoven fabric/spun-bonded nonwoven fabric (crimped conjugate fiber), and the like. Preferably, the basis weight of the nonwoven fabric in each layer to be laminated is in the range of 2 to 25 $g/m^2$. In the melt-blown nonwoven fabric described above, a diameter of the constituent fiber is preferably in the range of 1 to 5 $\mu$m.

Moreover, a preferred embodiment of the nonwoven fabric laminate of the present invention comprises said nonwoven fabric (a spun-bonded nonwoven fabric is preferred) of the present invention, which is composed of the crimped conjugate fiber, and a spun-bonded nonwoven fabric produced by a spun-bonding process laminated thereon as a surface layer, which spun-bonded nonwoven fabric is composed of microfibers (preferably having fineness of 0.8 to 2.5 deniers, more preferably 0.8 to 1.5 deniers). According to this construction, the nonwoven fabric laminate having excellent bulkiness and surface smoothness and improved water impermeability can be obtained. Examples of the layer structure of the laminate in this case include a two layer structure comprising spun-bonded nonwoven fabric (microfibers)/spun-bonded nonwoven fabric (crimped conjugate fiber); a three layer structure comprising spun-bonded nonwoven fabric (microfibers)/spun-bonded nonwoven fabric (crimped conjugate fiber)/spun-bonded nonwoven fabric (microfibers), comprising spun-bonded nonwoven fabric (microfibers)/spun-bonded nonwoven fabric (crimped conjugate fiber)/melt-blown nonwoven fabric, etc.; a four or five layer structure comprising spun-bonded nonwoven fabric (microfibers)/spun-bonded nonwoven fabric (crimped conjugate fiber)/melt-blown nonwoven fabric/spun-bonded nonwoven fabric (microfibers), comprising spun-bonded nonwoven fabric (microfibers)/spun-bonded nonwoven fabric (crimped conjugate fiber)/melt-blown nonwoven fabric/spun-bonded nonwoven fabric (crimped conjugate fiber)/spun-bonded nonwoven fabric (microfibers), and the like. Preferably, the basis weight of the nonwoven fabric in each layer to be laminated is in the range of 2 to 25 $g/m^2$. The spun-bonded nonwoven fabric made from microfibers described above is obtained by controlling the manufacturing conditions in the spun-bonding process.

A preferred embodiment of the nonwoven fabric laminate of the invention further includes a laminate comprising the nonwoven fabric composed of the crimped conjugate fiber described above and an air permeable film layer laminated thereon. The air permeable film includes a film composed of a thermoplastic elastomer having moisture permeability, e.g., polyurethane elastomer, polyester elastomer, polyamide elastomer, etc. Also, a polyolefin-based porous film, made by stretching the polyolefin added with a fillers, etc., may be employed. As such an air permeable film, it is preferred to use a film having a basis weight of approximately 2 to 40 $g/m^2$. Such a nonwoven fabric laminate can be obtained as a cloth-like conjugate material that has extremely high water impermeability and also has air permeability (moisture permeability), bulky feeling, etc.

The nonwoven fabric composed of the crimped conjugate fiber of the present invention which can be spun by conventional melt spinning techniques can provide an excellent bulkiness, softness and extensibility as well as excellent spinnability and fuzzing resistance. To the nonwoven fabric laminate using said nonwoven fabric, various properties, e.g., water impermeability, surface smoothness, fluid flow handling properties, etc., can be imparted depending upon a nonwoven fabric to be laminated. Therefore, said nonwoven fabric can be advantageously used alone or in a form of laminate with other materials, as side gathering, back sheets, top sheets or waist materials for disposable diapers or sanitary napkins, and may also be preferably applicable to household materials such as wipers, etc. and to industrial materials such as an oil blotter, etc.

[EXAMPLES]

Hereinafter the present invention will be described in more detail with reference to EXAMPLES below but is not deemed to be limited thereto.

Measurement and evaluation of physical properties in EXAMPLES and COMPARATIVE EXAMPLES are as follows.

(1) Number of crimps

The number of crimps was measured in accordance with JIS L1015.

(2) Porosity (evaluation of bulkiness)

Porosity of a nonwoven fabric was calculated by the following equation, wherein the basis weight and thickness of the nonwoven fabric are W [g/m$^2$] and L [$\mu$m] and the density of its material is d [g/cm$^3$]:

$$\texttt{Porosity [vol\%] = \{(L - (W/d))/L\} x 100}$$

In the equation, the thickness of the nonwoven fabric is a value obtained by putting a load of 20 g/cm$^2$ on 10-ply sheet of the nonwoven fabric, allowing to stand for 10 seconds, then measuring the thickness and dividing the thickness obtained by 10; and the density of the material is a density of the molded article obtained by compression molding of the nonwoven fabric at 200 to 230°C (in accordance with ASTM D1505).

(3) KOSHI (stiffness) value (evaluation of softness)

The tensile, shear, compression, surface wear and bending tests were conducted by use of the KES-FB system available from Kato Tech Co., Ltd. using knit high-sensitivity test conditions. The KOSHI value was determined by performing a calculation using the results of the tests as parameters under knit underwear (summer) conditions. The KOSHI value indicates that as the value decreases, softness improves.

(4) FUKURAMI value (evaluation of bulkiness)

The tensile, shear, compression, surface wear and bending tests were conducted by use of the KES-FB system available from Kato Tech Co. , Ltd. using knit high-sensitivity test conditions. The FUKURAMI value was determined by performing a calculation using the results of the tests as parameters under knit underwear (summer) conditions. The FUKURAMI value indicates that as the value increases, the thickness increases.

(5) Tensile elongation

The tensile test was performed with a nonwoven fabric test piece of 25 mm in width at a distance of 100 mm between chucks under the conditions of a stress rate of 100 mm/min. A rate of the test piece elongated at the maximum tensile load was made its tensile elongation (%).

(6) Fuzzing (brushing test) (evaluation of abrasion resistance)

In accordance with JIS L1076, 3 pieces were prepared from nonwoven fabric in a size of 25 cm in the machine direction (MD) of the nonwoven fabric and 20 cm in the cross direction (CD), mounted on sample holders of a brush and sponge tester, pressed against a felt instead of the brush and sponge, and rubbed for 5 minutes at a speed of 58 min$^{-1}$ (rpm). After rubbing, the samples were visually observed for evaluation. The results of the evaluation were expressed by the following criteria, indicating that as the numerical value increases, fuzzing becomes less.

    5: no fuzzing
    4: fuzzing was little observed
    3: some fuzzing was observed
    2: fuzzing was intensely observed
    1: fuzzing was intense and rips were observed

(7) Water impermeability

The water impermeability was measured in accordance with JIS L1072A (low water pressure method). Four test pieces, each having a size of approximately 15 x 15 cm, were prepared and mounted on a waterproof tester (manufactured by Tester Sangyo K.K.) in such a manner that water was in contact with the surface of the test piece. A level device charged with water at ambient temperature was elevated at a rate of $60\pm3$ cm/min to apply a hydraulic pressure to the test piece. The water level when water leaked from 3 places at the back surface of the test piece was measured and the pressure was determined at that time to be water impermeability.

REFERENCE EXAMPLE 1

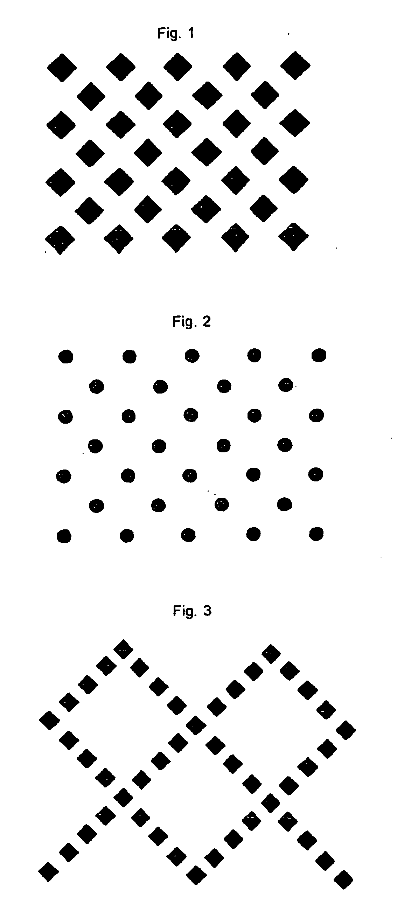

Using a propylene homopolymer having the melting point of 162°C and MFR of 60 g/10 min (as measured at a temperature of 230°C under a load of 2.16 kg in accordance with ASTM D1238; hereinafter the same unless otherwise indicated) as the first propylene-based polymer and as the second propylene-based polymer a propylene-ethylene random copolymer having the melting point of 142°C, MFR of 60 g/10 min and the ethylene unit content of 4.0 mol %, conjugate melt-spinning was carried out by a spun-bonding process to deposit an eccentric core-sheath type conjugate fiber having the core made from the propylene homopolymer and the sheath made from the propylene-ethylene random copolymer (the ratio of the core to the sheath was 20/80 by weight) on the collection surface. The conjugate fiber was then subjected to emboss processing at an emboss temperature of 110°C with an emboss pattern (emboss area percentage: 18.2%, non-emboss unit area: 0.74 mm$^2$) shown in FIG. 1. Thus, a nonwoven fabric composed of crimped conjugate fibers having the basis weight of 25 g/m$^2$ and the fineness of the constituent fiber of 2.5 deniers was produced. The details of the propylene-based polymer components are shown in TABLE 1 and the measurement/evaluation results on the nonwoven fabric obtained are shown in TABLE 2.

EXAMPLE 2

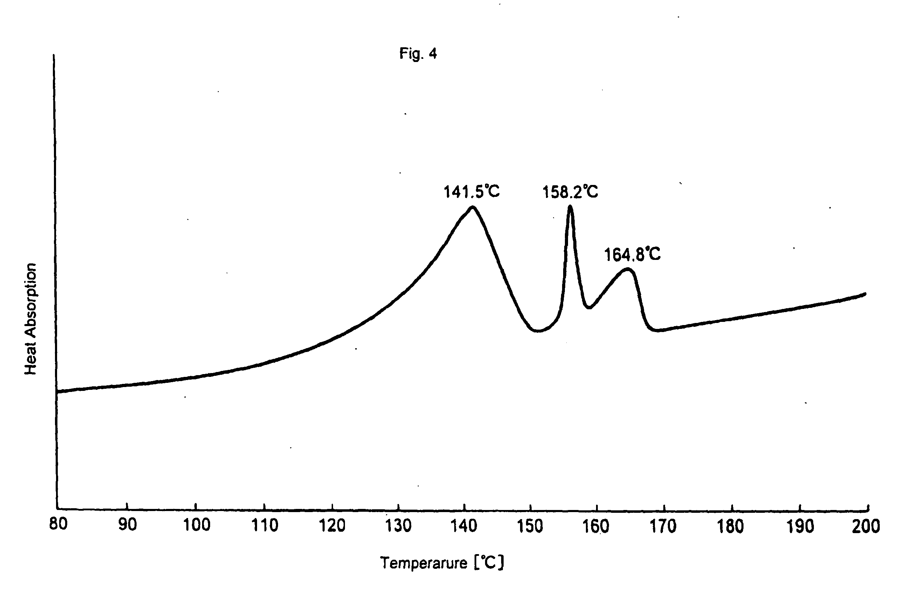

A nonwoven fabric composed of crimped conjugate fibers having the basis weight of 25 g/m$^2$ and the fineness of the constituent fiber of 2.4 deniers was produced in a manner similar to EXAMPLE 1, except that a propylene-ethylene random copolymer having the melting point of 138°C, MFR of 60 g/10 min and the ethylene unit content of 5.0 mol % was used as the second propylene-based polymer and the emboss temperature was changed to 100°C. The details of the propylene-based polymer components are shown in TABLE 1 and the measurement/evaluation results on the nonwoven fabric obtained are shown in TABLE 2. The melting point peaks of the thus obtained conjugate fibers by DSC in the first run were observed at 141.5°c, 156.2°C and 164.8°C, and the peak area percentages were 80%, 10% and 10%, respectively. The measurement curve by DSC is shown in FIG. 4.

REFERENCE EXAMPLE 3

A nonwoven fabric composed of crimped conjugate fibers having the basis weight of 25 g/m$^2$ and the fineness of the constituent fiber of 2.4 deniers was produced in a manner similar to EXAMPLE 2, except that the eccentric core-sheath type conjugate fiber had the core/sheath = 30/70 (by weight ratio). The details of the propylene-based polymer components are shown in TABLE 1 and the measurement/evaluation results on the nonwoven fabric obtained are shown in TABLE 2.

REFERENCE EXAMPLE 4

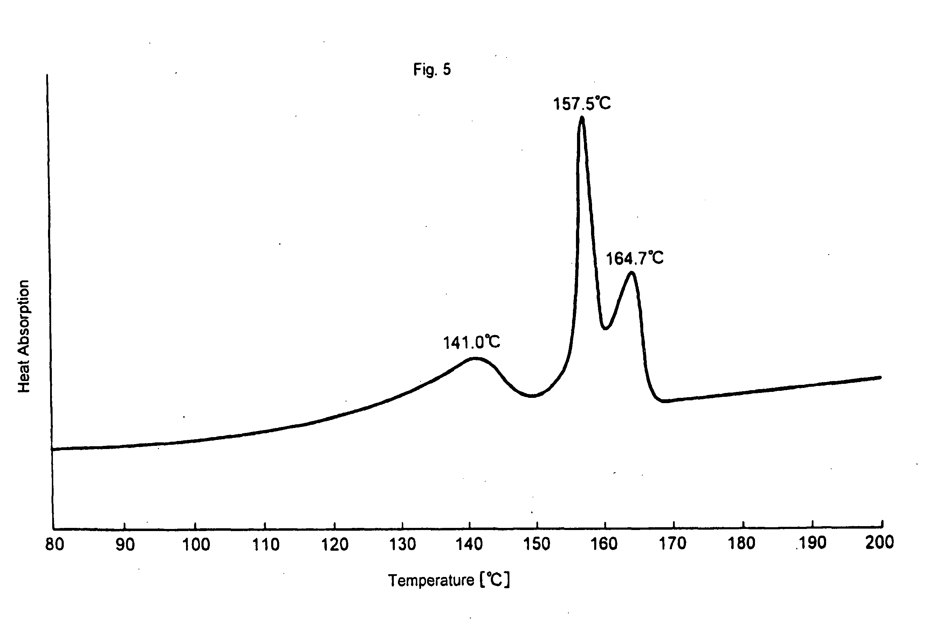

A nonwoven fabric composed of crimped conjugate fibers having the basis weight of 25 g/m$^2$ and the fineness of the constituent fiber of 2.4 deniers was produced in a manner similar to EXAMPLE 2, except that the eccentric core-sheath type conjugate fiber had the core/sheath = 50/50 (by weight ratio). The details of the propylene-based polymer components are shown in TABLE 1 and the measurement/evaluation results on the nonwoven fabric obtained are shown in TABLE 2.
The melting point peaks of the thus obtained conjugate fibers by DSC in the first run were observed at 141.0°C, 157.5°C and 164.7°C, and the peak area percentages were 40%, 40% and 20%, respectively. The measurement curve by DSC is shown in FIG. 5.

REFERENCE EXAMPLE 5

A nonwoven fabric composed of crimped conjugate fibers having the basis weight of 25 g/m$^2$ and the fineness of the constituent fiber of 2.5 deniers was produced in a manner similar to EXAMPLE 1, except that a propylene-ethylene random copolymer having the melting point of 124°C, MFR of 60 g/10 min and the ethylene unit content of 8.5 mol % was used as the second propylene-based polymer and the emboss temperature was changed to 95°C. The details of the propylene-based polymer components are shown in TABLE 1 and the measurement/evaluation results on the nonwoven fabric obtained are shown in TABLE 2.

EXAMPLE 6

A nonwoven fabric composed of crimped conjugate fibers having the basis weight of 25 g/m$^2$ and the fineness of the constituent fiber of 2.4 deniers was produced in a manner similar to EXAMPLE 2, except that the emboss pattern shown in FIG. 1 and having the emboss area percentage of 10.2% and the non-emboss unit area of 1.04 mm$^2$ was used. The details of the propylene-based polymer components are shown in TABLE 1 and the measurement/evaluation results on the nonwoven fabric obtained are shown in TABLE 2.

EXAMPLE 7

A nonwoven fabric composed of crimped conjugate fibers having the basis weight of 25 g/m$^2$ and the fineness of the constituent fiber of 2.4 deniers was produced in a manner similar to EXAMPLE 2, except that the emboss pattern shown in FIG. 2 and having the emboss area percentage of 6.9% and the non-emboss unit area of 4.56 mm$^2$ was used. The details of the propylene-based polymer components are shown in TABLE 1 and the measurement/evaluation results on the nonwoven fabric obtained are shown in TABLE 2.

EXAMPLE 8

A nonwoven fabric composed of crimped conjugate fibers having the basis weight of 25 g/m$^2$ and the fineness of the constituent fiber of 2.4 deniers was produced in a manner similar to EXAMPLE 2, except that the emboss pattern shown in FIG. 3 and having the emboss area percentage of 9.7% and the non-emboss unit area of 26.40 mm$^2$ was used. The details of the propylene-based polymer components are shown in TABLE 1 and the measurement/evaluation results on the nonwoven fabric obtained are shown in TABLE 2.

COMPARATIVE EXAMPLE 1

Using a propylene homopolymer having the melting point of 162°C and MFR of 30 g/10 min and a medium density polyethylene having the melting point of 120°C and MFR of 27 g/10 min (as measured at a temperature of 190°C under a load of 2.16 kg by a modification of ASTM D1238), conjugate melt-spinning was carried out by a spun-bonding process to deposit an eccentric core-sheath type conjugate fiber having the core made from the propylene homopolymer and the sheath made from the medium density polyethylene (the ratio of the core to the sheath was 50/50 by weight) on the collection surface. The conjugate fiber was then subjected to emboss processing at an emboss temperature of 115°C with an emboss pattern (emboss area percentage: 18.2%, non-emboss unit area: 0.74 mm$^2$) shown in FIG. 1 to produce a spun-bonded nonwoven fabric composed of conjugate fibers having the basis weight of 25 g/m$^2$ and the fineness of the constituent fiber of 2.4 deniers. The spinnability of the conjugate fibers was not good and fused or snapped filaments were observed. The details of the propylene-based polymer components are shown in TABLE 1 and the measurement/evaluation results on the nonwoven fabric obtained are shown in TABLE 2.

COMPARATIVE EXAMPLE 2

Using a propylene homopolymer (PP-1) having the melting point of 162°C and MFR of 30 g/10 min and a propylene homopolymer (PP-2) having the melting point of 162°C and MFR of 60 g/10 min, conjugate melt-spinning was carried out by a spun-bonding process to deposit an eccentric core-sheath type conjugate fiber having the core made from the propylene homopolymer (PP-1) and the sheath made from the propylene homopolymer (PP-2) (the ratio of the core to the sheath was 10/90 by weight) on the collection surface. The conjugate fiber was then subjected to emboss processing at an emboss temperature of 125°C with an emboss pattern (emboss area percentage: 18.2%, non-emboss unit area: 0.74 mm$^2$) shown in FIG. 1 to produce a spun-bonded nonwoven fabric composed of conjugate fibers having the basis weight of 25 g/m$^2$ and the fineness of the constituent fiber of 2.5 deniers . The spinnability of the conjugate fibers was not good and fused or snapped filaments were observed. The details of the propylene-based polymer components are shown in TABLE 1 and the measurement/evaluation results on the nonwoven fabric obtained are shown in TABLE 2.

COMPARATIVE EXAMPLE 3

A nonwoven fabric composed of conjugate fibers having the basis weight of 25 g/m$^2$ and the fineness of the constituent fiber of 2.5 deniers was produced in a manner similar to EXAMPLE 1, except that the eccentric core-sheath type conjugate fiber had the core/sheath = 80/20 (by weight ratio) and the emboss temperature was changed to 120°C. The details of the propylene-based polymer components are shown in TABLE 1 and the measurement/evaluation results on the nonwoven fabric obtained are shown in TABLE 2.

COMPARATIVE EXAMPLE 4

A nonwoven fabric composed of conjugate fibers having the basis weight of 25 g/m$^2$ and the fineness of the constituent fiber of 2.5 deniers was produced in a manner similar to EXAMPLE 2, except that the eccentric core-sheath type conjugate fiber had the core/sheath = 80/20 (by weight ratio) and the emboss temperature was changed to 120°C. The details of the propylene-based polymer components are shown in TABLE 1 and the measurement/evaluation results on the nonwoven fabric obtained are shown in TABLE 2.

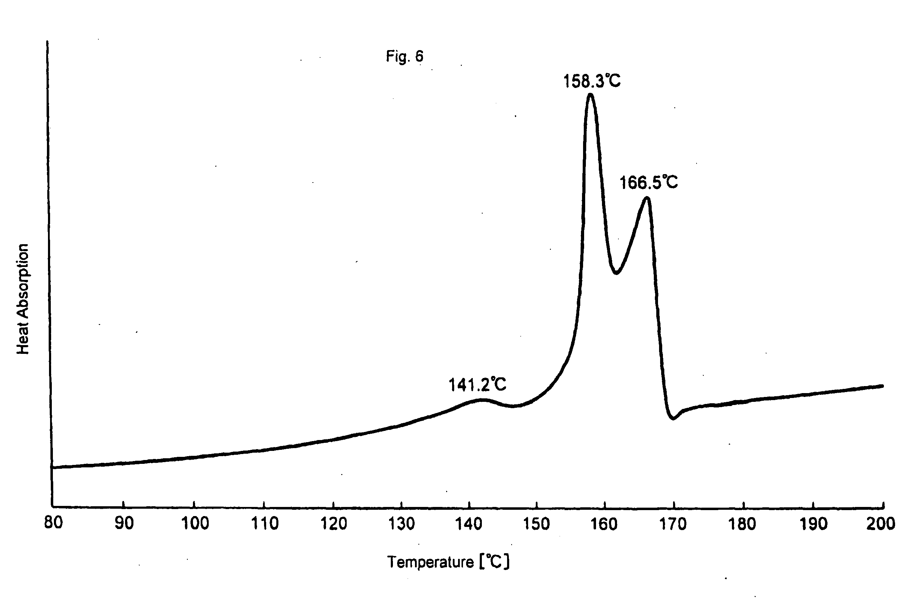

The melting point peaks of the thus obtained conjugate fibers by DSC in the first run were observed at 141.2°C, 158.3°C and 166.5°C, and the peak area percentages were 15%, 55% and 30%, respectively. The measurement curve by DSC is shown in FIG. 6.

COMPARATIVE EXAMPLE 5

Melt-spinning was carried by the spun-bonding process in a manner similar to EXAMPLE 1, except for using the propylene homopolymer alone, which was used as the first propylene-based polymer in EXAMPLE 1, to form a spun-bonded nonwoven fabric web having the fineness of 2.5 deniers and the basis weight of 25 g/m$^2$ on the collection surface. The nonwoven fabric web was subjected to emboss processing under the same conditions as in EXAMPLE 1 to prepare a spun-bonded nonwoven fabric. The details of the propylene-based polymer components are shown in TABLE 1 and the measurement/evaluation results on the nonwoven fabric obtained are shown in TABLE 2.

Table 1

| | First component (1) | | | | Second component (2) | | | | Melting point difference [(1)-(2)] (°C) | MFR ratio (1)/(2) | Weight ratio (1)/(2) | Emboss pattern | |
|---|---|---|---|---|---|---|---|---|---|---|---|---|---|
| | Polymer | Melting point (°C) | MFR (g/10min) | Ethylene content (mol %) | Polymer | Melting point (°C) | MFR (g/10min) | Ethylene content (mol %) | | | | Emboss area percentage (%) | Non-emboss unit area (mm$^2$) |
| Ref. Ex1 | Homo PP | 162 | 60 | 0 | Random PP | 142 | 60 | 4.0 | 20 | 1 | 20/80 | 18.2 | 0.74 |
| Ex.2 | Homo PP | 162 | 60 | 0 | Random pp | 138 | 60 | 5.0 | 24 | 1 | 20/80 | 18.2 | 0.74 |
| Ref. Ex. 3 | Homo PP | 162 | 60 | 0 | Random PP | 138 | 60 | 5.0 | 24 | 1 | 30/70 | 18.2 | 0.74 |
| Ref. Ex 4 | Homo PP | 162 | 60 | 0 | Random PP | 138 | 60 | 5.0 | 24 | 1 | 50/50 | 18.2 | 0.74 |
| Ref. Ex. 5 | Homo PP | 162 | 60 | 0 | Random PP | 124 | 60 | 8.5 | 38 | 1 | 20/80 | 18.2 | 0.74 |
| Ex. 6 | Homo PP | 162 | 60 | 0 | Random PP | 138 | 60 | 5.0 | 24 | 1 | 20/80 | 10.2 | 1.04 |
| Ex. 7 | Homo PP | 162 | 60 | 0 | Random PP | 138 | 60 | 5.0 | 24 | 1 | 20/80 | 6.9 | 4.56 |
| Ex. 8 | Homo PP | 162 | 60 | 0 | Random pp | 138 | 60 | 5.0 | 24 | 1 | 20/80 | 9.7 | 26.40 |
| Comp. Ex. 1 | Homo PP | 162 | 30 | 0 | MDPE | 120 | 27 | - | 42 | 0.9 | 50/50 | 18.2 | 0.74 |
| Comp. Ex.2 | Homo PP | 162 | 30 | 0 | Homo PP | 162 | 60 | 0 | 0 | 2 | 10190 | 18.2 | 0.74 |
| Comp. Ex. 3 | Homo PP | 162 | 60 | 0 | Random pp | 142 | 60 | 4.0 | 20 | 1 | 80/20 | 18.2 | 0.74 |
| Comp. Ex. 4 | Homo PP | 162 | 60 | 0 | Random PP | 138 | 60 | 5.0 | 24 | 1 | 80/20 | 18.2 | 0.74 |

(continued)

| | First component (1) | | | | Second component (2) | | | | Melting point difference [(1)-(2)] (°C) | MFR ratio (1) /(2) | Weight ratio (1)/ (2) | Emboss pattern | |
|---|---|---|---|---|---|---|---|---|---|---|---|---|---|
| | Polymer | Melting point (°C) | MFR (g/ 10min) | Ethylene content (mol %) | Polymer | Melting point (°C) | MFR (g/ 10min) | Ethylene content (mol %) | | | | Emboss area percentage (%) | Non-emboss unit area (mm$^2$) |
| Comp. Ex. 5 | Homo PP | 162 | 60 | 0 | - | - | - | - | - | - | 100/0 | 18.2 | 0.74 |
| Homo PP : Propylene homopolymer, Random PP : Propylene-ethylene random copolymer, MDPE : Middle density polyethylene | | | | | | | | | | | | | |

Table 2

| | Fineness (denier) | Number of crimps (No./25mm) | Basis weight (g/m²) | Thickness (μm) | Density (g/cm³) | Porosity (vol. %) | KOSHI value | Tensile elongation (MD) (%) | Fuzzing | Spianability |
|---|---|---|---|---|---|---|---|---|---|---|
| Ref Ex. 1 | 2.5 | 11 | 25 | 230 | 0.91 | 88 | 10.3 | 70 | 5 | Excellent |
| Ex. 2 | 2.4 | 70 | 25 | 270 | 0.91 | 90 | 8.5 | 120 | 5 | Excellent |
| Ref Ex. 3 | 2.4 | 55 | 25 | 260 | 0.91 | 89 | 9 | 110 | 5 | Excellent |
| Ref Ex. 4 | 2.4 | 12 | 25 | 250 | 0.91 | 89 | 10 | 90 | 5 | Excellent |
| Ref.Ex. 5 | 2.5 | 65 | 25 | 230 | 0.91 | 88 | 7.5 | 130 | 5 | Excellent |
| Ex. 6 | 2.4 | 70 | 25 | 260 | 0.91 | 89 | 8.2 | 110 | 5 | Excellent |
| Ex. 7 | 2.4 | 70 | 25 | 300 | 0.91 | 91 | 8.1 | 130 | 5 | Excellent |
| Ex. 8 | 2.4 | 70 | 25 | 330 | 0.91 | 92 | 8 | 130 | 5 | Excellent |
| Comp. Ex. 1 | 2.4 | 10 | 25 | 200 | 0.91 | 87 | 9 | 150 | 1 | No good |
| Comp. Ex. 2 | 2.5 | 80 | 25 | 350 | 0.91 | 92 | 10.5 | 180 | 5 | No good |
| Comp. Ex. 3 | 2.5 | 6 | 25 | 240 | 0.91 | 89 | 12 | 100 | 5 | Excellent |
| Comp. Ex. 4 | 2.5 | 5 | 25 | 230 | 0.91 | 88 | 11.6 | 80 | 5 | Excellent |
| Comp. Ex. 5 | 2.5 | 5> | 25 | 200 | 0.91 | 87 | 13 | 50 | 5 | Excellent |

In COMPARATIVE EXAMPLE 1, polyethylene was used as the second component and as a result, the spinnability was not good and fuzzing resistance decreased. In COMPARATIVE EXAMPLE 2, the propylene homopolymers having no difference in the melting point between the first and second components but having greatly different MFR values were used so that crimped fibers were obtained but the spinnability was not good. In COMPARATIVE EXAMPLES 3 and 4, the content of the first component was larger than that of the second component so that the KOSHI value increased to make softness worse and the number of crimps also decreased.

EXAMPLE 9

Using a propylene homopolymer having MFR of 60 g/10 min as a lower layer of a nonwoven fabric laminate, melt-spinning was carried out by a spun-bonding process to form a spun-bonded nonwoven fabric web having the fineness of 2.4 deniers and the basis weight of 8 g/m$^2$ on the collection surface. Then, using a propylene homopolymer having the melting point of 162°C and MFR of 60 g/10 min as the first propylene-based polymer and as the second propylene-based polymer a propylene-ethylene random copolymer having the melting point of 138°C, MFR of 60 g/10 min and the ethylene unit content of 5.0 mol %, conjugate melt-spinning was carried out by a spun-bonding process to deposit as an upper layer a nonwoven fabric web composed of the eccentric core-sheath type crimped conjugate fiber (fineness of 2.4 deniers) of 16 g/m$^2$ in the basis weight, having the core made from the propylene homopolymer and the sheath made from the propylene-ethylene random copolymer (the ratio of the core to the sheath was 20/80 by weight) in-line on the spun-bonded nonwoven fabric web described above, which was then subjected to emboss processing at an emboss temperature of 110°C with an emboss pattern (emboss area percentage: 9.7%, non-emboss unit area: 26.4 mm$^2$) shown in FIG. 3. Thus, a nonwoven fabric laminate (the total basis weight of 24 g/m$^2$) was produced. The measurement results of the nonwoven fabric laminate obtained are shown in TABLE 3.

EXAMPLE 10

A nonwoven fabric laminate was produced in a manner similar to EXAMPLE 9, except that the melt-spinning was carried out by a spun-bonding process using a propylene homopolymer having MFR of 60 g/10 min as a lower layer of a nonwoven fabric laminate to form a spun-bonded nonwoven fabric web having the fineness of 1.2 deniers and the basis weight of 8 g/m$^2$ on the collection surface. The measurement results of the nonwoven fabric laminate obtained are shown in TABLE 3.

EXAMPLE 11

The same spun-bonded nonwoven fabric web as that of EXAMPLE 9 was formed on the collection surface as a lower layer of a nonwoven fabric laminate. Then, using the same propylene homopolymer and the propylene ethylene random copolymer as those of EXAMPLE 9, a nonwoven fabric web composed of the same crimped conjugate fiber as that of EXAMPLE 9 except the basis weight of 8 g/m$^2$, was deposited in-line on the spun-bonded nonwoven fabric web as an intermediate layer. A spun-bonded nonwoven fabric web was further deposited in-line on the nonwoven fabric web composed of the crimped conjugate fibers described above as an upper layer under the same conditions as those of the lower layer. The laminate was subjected to emboss processing under the same conditions as in EXAMPLE 9 to produce the nonwoven fabric laminate (the total basis weight of 24 g/m$^2$). The measurement results of the nonwoven fabric laminate obtained are shown in TABLE 3.

EXAMPLE 12

The same spun-bonded nonwoven fabric web as that of EXAMPLE 10 was formed on the collection surface as a lower layer in a nonwoven fabric laminate. Then, using the same propylene homopolymer and the propylene ethylene random copolymer as those of EXAMPLE 9, a nonwoven fabric web composed of the same crimped conjugate fiber as that of EXAMPLE 9 except the basis weight of 8 g/m$^2$, was deposited in-line on the spun-bonded nonwoven fabric web as an intermediate layer. A spun-bonded nonwoven fabric web was further deposited in-line on the nonwoven fabric web composed of the crimped conjugate fibers described above as an upper layer under the same conditions as those of the lower layer. The laminate was subjected to emboss processing under the same conditions as in EXAMPLE 9 to produce the nonwoven fabric laminate (the total basis weight of 24 g/m$^2$). The measurement results of the nonwoven fabric laminate obtained are shown in TABLE 3.

EXAMPLE 13

A nonwoven fabric laminate (the total basis weight of 24 g/m$^2$) was produced in a manner similar to EXAMPLE 9, except that a propylene homopolymer having MFR of 1000 g/10 min was used as a lower layer in a nonwoven fabric laminate and the melt-spinning was conducted by a melt-blown process to form the melt-blown nonwoven fabric having the mean fiber diameter of 3 $\mu$m and the basis weight of 8 g/m$^2$ on the collection surface. The measurement results of the nonwoven fabric laminate obtained are shown in TABLE 3.

EXAMPLE 14

The same melt-blown nonwoven fabric as that of EXAMPLE 13 was formed on the collection surface as a lower layer of a nonwoven fabric laminate. Then, using the same propylene homopolymer and the propylene ethylene random copolymer as those of EXAMPLE 9, a nonwoven fabric composed of the same crimped conjugate fiber as that of EXAMPLE 9 except the basis weight of 8 g/m$^2$, was deposited in-line on the melt-blown nonwoven fabric as an intermediate layer. The same spun-bonded nonwoven fabric web as the lower layer of EXAMPLE 10 was further deposited in-line on the nonwoven fabric composed of the crimped conjugate fibers described above as an upper layer. The laminate was subjected to emboss processing under the same conditions as in EXAMPLE 9 to produce the nonwoven fabric laminate (the total weight of 24 g/m$^2$). The measurement results of the nonwoven fabric laminate obtained are shown in TABLE 3.

COMPARATIVE EXAMPLE 6

Using the same propylene homopolymer as the lower layer of EXAMPLE 9, the melt-spinning was conducted by a spun-bonding process to form the spun-bonded nonwoven fabric having the fineness of 2.4 deniers and the basis weight of 24 g/m$^2$ on the collection surface. The nonwoven fabric web was then subjected to emboss processing under the same conditions as in EXAMPLE 9 to produce the spun-bonded nonwoven fabric. The measurement results of the nonwoven fabric obtained are shown in TABLE 3.

COMPARATIVE EXAMPLE 7

Using the same propylene homopolymer as the lower layer of EXAMPLE 10, the melt-spinning was carried out by a spun-bonding process to form the spun-bonded nonwoven fabric web having the fineness of 1.2 deniers and the basis weight of 24 g/m$^2$ on the collection surface. The nonwoven fabric web was then subjected to emboss processing under the same conditions as in EXAMPLE 9 to produce the spun-bonded nonwoven fabric. The measurement results of the nonwoven fabric obtained are shown in TABLE 3.

EXAMPLE 15

Using a propylene homopolymer having the melting point of 162°C and MFR of 60 g/10 min and a propylene-ethylene copolymer having the melting point of 138°C, MFR of 60 g/10 min and the ethylene unit content of 5.0 mol %, conjugate melt-spinning was carried out by a spun-bonding process, and the resulting web of eccentric core-sheath type conjugate fibers (fineness of 2.4 deniers) having the core made from the propylene homopolymer and the sheath made from the propylene-ethylene random copolymer (the core/sheath ratio = 20/80 by weight) was then subjected to emboss processing at an emboss temperature of 110°C with an emboss pattern (emboss area percentage: 9.7%, non-emboss unit area: 26.4 mm$^2$) shown in FIG. 3. Thus, a nonwoven fabric composed of crimped conjugate fibers having the basis weight of 20 g/m$^2$ was produced.

A mixture of 100 parts by weight of polyethylene (density of 0.920 g/cm$^3$, MFR of 2g/10 min) and 60 parts by weight of calcium carbonate as a filler was formed into a film. The film was then monoaxially stretched to form a polyethylene porous film having the basis weight of 15 g/m$^2$. The nonwoven fabric described above was bonded to the porous film described above with 1.5 g/m$^2$ of polyolefin-based hot melt adhesive to produce the nonwoven fabric laminate (the total basis weight of 36.5 g/m$^2$). The measurement results of the nonwoven fabric laminate obtained are shown in TABLE 3.

COMPARATIVE EXAMPLE 8

A nonwoven fabric laminate composed of a nonwoven fabric/a porous film was produced in a manner similar to EXAMPLE 15, except that a propylene homopolymer having the melting point of 162°C and MFR of 60 g/10 min was used as a nonwoven fabric instead of the nonwoven fabric of the crimped conjugate fibers in EXAMPLE 15, the melt-spinning was carried out by a spun-bonding process, and the web thus obtained having the fineness of 2.4 deniers was then subjected to emboss processing at an emboss temperature of 135°C with an emboss pattern (emboss area percentage: 9.7%, non-emboss unit area: 26.4 mm$^2$) shown in FIG. 3 to produce the nonwoven fabric having the basis weight of 20 g/m$^2$. The measurement results are shown in TABLE 3.

COMPARATIVE EXAMPLE 9

A mixture of 100 parts by weight of polyethylene (density of 0.920 g/cm$^3$, MFR of 6 g/10 min) and 60 parts by weight of calcium carbonate as a filler was formed into a film. The film was then monoaxially stretched to form a polyethylene porous film having the basis weight of 20 g/m$^2$. The measurement results of the film are shown in TABLE 3.

Table 3

| | Layer structure of nonwoven fabric | | | | Basis weight (g/m$^2$) | KES | | Fuzzing (mg/cm$^2$) | Water Impermeability (mmH$_2$O) |
|---|---|---|---|---|---|---|---|---|---|
| | Upper layer | Intermediate layer | Lower layer | Bonding method | | Koshi | Fukurami | | |
| Ex.9 | Crimped fiber 16g/m$^2$ | - | .4d fiber 8g/m$^2$ | Heat emboss Area %=9.7% | 24 | 10.4 | 0.9 | 5 | 75 |
| Ex. 10 | Crimped fiber 16g/m$^2$ | - | 1.2d fiber 8g/m$^2$ | Heat emboss Area %=9,7% | 24 | 10.2 | 0.8 | 5 | 80 |
| Ex. 11 | 2.4d fiber 8g/m$^2$ | Crimped fiber 8g/m$^2$ | 2.4d fiber 8g/m$^2$ | Heat emboss Area %=9.7% | 24 | 12.3 | 0.1 | 5 | 95 |
| Ex. 12 | 1.2d fiber 8g/m$^2$ | Crimped fiber 8g/m$^2$ | 1.2d fiber 8g/m$^2$ | Heat emboss Area %=9,7% | 24 | 12.4 | 0.1 | 5 | 110 |
| Ex. 13 | Crimped fiber 16g/m$^2$ | - | 3$\mu$m fiber 8g/m$^2$ | Heat emboss Area %=9.7% | 24 | 11.1 | 1.1 | 5 | 350 |
| Ex. 14 | 1.2d fiber 8g/m$^2$ | Crimped fiber 8g/m$^2$ | 3$\mu$m fiber 8g/m$^2$ | Heat emboss Area %=9.7% | 24 | 12.1 | 0.5 | 5 | 360 |
| Comp. Ex. 6 | 2.4d fiber 24g/m$^2$ | - | - | Heat emboss Area %=9.7% | 24 | 13.7 | -0.6 | 5 | 80 |
| Comp. Ex.7 | 1.2d fiber 24g/m$^2$ | - | - | Heat emboss Area %=9.7% | 24 | 13.6 | -0.8 | 5 | 120 |
| Ex. 15 | Crimped ' fiber 20g/m$^2$ | - | Porous film 15g/m$^2$ | PO hot melt 1.5g/m$^2$ | 36.5 | 11.0 | 1.2 | 5 | >1500 |
| Comp. Hex. 8 | 2.4d fiber 20g/m$^2$ | - | Porous film 15g/m$^2$ | PO hot melt 1.5g/m$^2$ | 36.5 | 13.9 | -0.4 | 5 | >1500 |
| Comp.. Ex. 9 | Porous film 20g/m$^2$ | - | - | - | 20 | 4.1 | -3.0 | 5 | >1500 |

INDUSTRIAL APPLICABILITY

The nonwoven fabric composed of the crimped conjugate fiber of the present invention has excellent bulkiness, softness and extensibility, as well as excellent spinnability and fuzzing resistance, and may be advantageously used for applications including sanitary goods such as disposable diapers and sanitary napkins.

The nonwoven fabric laminate using the nonwoven fabric composed of the crimped conjugate fiber may be advantageously used also for applications such as household and industrial materials, in addition to the sanitary goods described above, since various properties can be imparted to the laminate depending upon other layers to be laminated thereon.

**Claims**

1. A nonwoven fabric of a crimped conjugate fiber comprising a first propylene-based polymer component and a second propylene-based polymer component, in which
   said first and second propylene-based polymer components are arranged to have substantially different zones in the cross-section of the crimped conjugate fiber and are extended continuously along the longitudinal direction of the crimped conjugate fiber,
   said second propylene-based polymer component forms at least a part of the peripheral surface continuously along the longitudinal direction of the crimped conjugate fiber,
   the melting point of said first propylene-based polymer component is higher by at least 24°C than the melting point of said second propylene-based polymer component as determined by a differential scanning calorimeter (DSC), and
   the ratio of said first/second propylene-based polymer components (by weight) is in the range of 20/80 to 5/95,
   wherein the crimped conjugate fiber is an eccentric core/sheath type conjugate fiber comprising the core composed of the first propylene-based polymer component and the sheath composed of the second propylene-based polymer component, and the number of crimps is 70/25 mm or more,
   and the first propylene-based polymer is a propylene homopolymer, the second propylene polymer is a propylene-ethylene random copolymer, having 5 to 10 mol % of the ethylene unit, and the first and second propylene-based polymers have a MFR of 20 to 200 g/10 min.

2. The nonwoven fabric composed of the crimped conjugate fiber according to claim 1, wherein the ratio of said second to first propylene-based polymer components in the melt flow rate (MFR: measurement temperature at 230°C under a load of 2.16 kg), as determined in accordance with ASTM D1238, is in the range of 0.8 to 1.2 (the second component/the first component).

3. The nonwoven fabric composed of the crimped conjugate fiber according to claims 1 or 2, wherein the crimped conjugate fiber constituting the nonwoven fabric has at least two melting point peaks for the crimped conjugate fiber as determined by DSC on the first run, and the area for the lowest melting point peak is not smaller than the area for each of the other higher melting point peaks.

4. The nonwoven fabric composed of the crimped conjugate fiber according to any one of claims 1 to 3, wherein the nonwoven fabric is heat fused by an emboss processing.

5. The nonwoven fabric composed of the crimped conjugate fiber according to claim 4, wherein said emboss processing is conducted under conditions of an emboss area percentage of 5 to 20% and a non-emboss unit area of at least 0.5 mm$^2$.

6. The nonwoven fabric composed of the crimped conjugate fiber according to any one of claims 1 to 5, wherein the nonwoven fabric of the crimped conjugate fiber is a spun-bonded nonwoven fabric produced by a spun-bonding process.

7. A nonwoven fabric laminate comprising at least two-layer structure, at least one of which is the nonwoven fabric composed of the crimped conjugate fiber according to any one of claims 1 to 6.

8. The nonwoven fabric laminate according to claim 7, wherein a plurality of the nonwoven fabrics composed of said crimped conjugate fiber different in the degree of crimps are laminated.

9. The nonwoven fabric laminate according to claim 7, wherein at least one other layer constituting the laminate is a layer of a melt-blown nonwoven fabric produced by a melt-blowing process.

10. The nonwoven fabric laminate according to claim 7, wherein at least one other layer constituting the laminate is a layer of a spun-bonded nonwoven fabric composed of microfibers produced by a spun-bonding process.

11. The nonwoven fabric laminate according to claim 7, wherein at least one other layer constituting the laminate is an air permeable film layer.

12. A disposable diaper using the nonwoven fabric of the crimped conjugate fiber or the nonwoven fabric laminate according to any one of claims 1 to 11.

13. A sanitary napkin using the nonwoven fabric of the crimped conjugate fiber or the nonwoven fabric laminate according to any one of claims 1 to 11.

**Patentansprüche**

1. Vliesstoff aus einer konjugierten Kräuselfaser, der eine erste Polymerkomponente auf Propylenbasis und eine zweite Polymerkomponente auf Propylenbasis umfasst, wobei
   die erste und zweite Polymerkomponente auf Propylenbasis so angeordnet sind, dass sie deutlich unterschiedliche Zonen im Querschnitt der konjugierten Kräuselfaser aufweisen und sich kontinuierlich entlang einer Längsrichtung der konjugierten Kräuselfaser erstrecken,
   wobei die zweite Polymerkomponente auf Propylenbasis zumindest einen Teil der Umfangsoberfläche kontinuierlich entlang der Längsrichtung der konjugierten Kräuselfaser bildet,
   der Schmelzpunkt der ersten Polymerkomponente auf Propylenbasis um zumindest 24 °C höher ist als der Schmelzpunkt der zweiten Polymerkomponente auf Propylenbasis, bestimmt mithilfe eines Differential-Scanning-Kalorimeters (DSC), und
   das Verhältnis zwischen erster und zweiter Polymerkomponente auf Propylenbasis (gewichtsbezogen) im Bereich von 20:80 bis 5:95 liegt,
   wobei die konjugierte Kräuselfaser eine Konjugatfaser vom exzentrischen Kern/Hülle-Typ ist, die einen Kern aus der ersten Polymerkomponente auf Propylenbasis und eine Hülle aus der zweiten Polymerkomponente auf Propylenbasis umfasst und deren Kräuselungszahl 70/25 mm oder mehr beträgt,
   und das erste Polymer auf Propylenbasis ein Propylenhomopolymer ist, das zweite Propylenpolymer ein statistisches Propylen-Ethylen-Copolymer mit 5 bis 10 Mol-% Ethyleneinheit ist und das erste und zweite Polymer auf Propylenbasis eine MFR von 20 bis 200 g/10 min aufweisen.

2. Vliesstoff aus einer konjugierten Kräuselfaser nach Anspruch 1, worin das Verhältnis zwischen der ersten und der zweiten Polymerkomponente auf Propylenbasis in der Schmelze-Massefließrate (MFR: Messtemperatur 230 °C unter einer Last von 2,16 kg), bestimmt gemäß ASTM D1238, im Bereich von 0,8 bis 1,2 (zweite Komponente/erste Komponente) liegt.

3. Vliesstoff aus einer konjugierten Kräuselfaser nach Anspruch 1 oder 2, wobei die den Vliesstoff bildende konjugierte Kräuselfaser zumindest zwei Schmelzpunktpeaks für die konjugierte Kräuselfaser aufweist, bestimmt mittels DSC beim ersten Durchgang, und die Fläche des niedrigsten Schmelzpunktpeaks nicht kleiner ist als die Fläche jeglicher anderer höherer Schmelzpunktpeaks.

4. Vliesstoff aus einer konjugierten Kräuselfaser nach einem der Ansprüche 1 bis 3, wobei der Vliesstoff durch ein Prägeverfahren wärmeverschweißt ist.

5. Vliesstoff aus einer konjugierten Kräuselfaser nach Anspruch 4, wobei das Prägeverfahren unter Bedingungen durchgeführt wird, die eine prozentuelle Prägefläche von 5 bis 20 % und eine nichtgeprägte Einheitsfläche mit zumindest 0,5 mm$^2$ umfasst.

6. Vliesstoff aus einer konjugierten Kräuselfaser nach einem der Ansprüche 1 bis 5, wobei der Vliesstoff aus der konjugierten Kräuselfaser ein Spinnvliesstoff ist, der durch ein Spinnverfahren hergestellt ist.

7. Vliesstofflaminat, das eine zumindest zweischichtige Struktur umfasst, wobei zumindest eine Schicht davon ein Vliesstoff aus einer konjugierten Kräuselfaser nach einem der Ansprüche 1 bis 6 ist.

**8.** Vliesstofflaminat nach Anspruch 7, wobei mehrere Vliesstoffe aus konjugierten Kräuselfasern mit unterschiedlichem Kräuselungsgrad laminiert sind.

**9.** Vliesstofflaminat nach Anspruch 7, wobei zumindest eine andere Schicht des Laminats eine Schicht aus schmelzgeblasenem Vliesstoff ist, der durch ein Schmelzblasverfahren hergestellt ist.

**10.** Vliesstofflaminat nach Anspruch 7, wobei zumindest eine andere Schicht des Laminats eine Schicht aus Spinnvliesstoff ist, der aus Mikrofasern besteht, die durch ein Spinnverfahren hergestellt sind.

**11.** Vliesstofflaminat nach Anspruch 7, wobei zumindest eine andere Schicht des Laminats eine Schicht aus einem luftdurchlässigen Film ist.

**12.** Einwegwindel unter Verwendung eines Vliesstoffs aus einer konjugierten Kräuselfaser oder eines Vliesstofflaminats nach einem der Ansprüche 1 bis 11.

**13.** Damenbinde unter Verwendung eines Vliesstoffs aus einer konjugierten Kräuselfaser oder eines Vliesstofflaminats nach einem der Ansprüche 1 bis 11.

**Revendications**

**1.** Etoffe non tissée d'une fibre conjuguée frisée comprenant un premier composant de polymère à base de propylène et un deuxième composant de polymère à base de propylène, dans laquelle
lesdits premier et deuxième composants de polymère à base de propylène sont agencés pour avoir des zones sensiblement différentes en section transversale de la fibre conjuguée frisée et s'étendent continuellement dans la direction longitudinale de la fibre conjuguée frisée,
ledit deuxième composant de polymère à base de propylène constitue au moins une partie de la surface périphérique continuellement dans la direction longitudinale de la fibre conjuguée frisée,
le point de fusion du premier composant de polymère à base de propylène est plus élevé selon au moins 24°C que le point de fusion dudit deuxième composant de polymère à base de propylène tel que déterminé par un calorimètre à balayage différentiel (DSC), et
le rapport desdits premier/deuxième composants de polymère à base de propylène (en poids) est dans la plage de 20/80 à 5/95,
où la fibre conjuguée frisée est une fibre conjuguée excentrique du type à noyau/gaine comprenant le noyau constitué par le premier composant de polymère à base de propylène et la gaine constituée du deuxième composant de polymère à base de propylène, et le nombre de frisures est de 70/25 mm ou plus,
et le premier polymère à base de propylène est un homopolymère de propylène, le deuxième polymère de propylène est un copolymère aléatoire de propylène-éthylène, ayant 5 à 10% en mole de l'unité d'éthylène, et les premier et deuxième polymères à base de propylène ont une MFR de 20 à 200g/10 min.

**2.** Etoffe non tissée constituée de la fibre conjuguée frisée selon la revendication 1, où le rapport desdits deuxième au premier composants de polymère à base de propylène dans la vitesse d'écoulement à l'état fondu (MFR: température de mesure à 230°C sous une charge de 2,16 kg), comme déterminé en accord avec ASTM D1238, est dans la plage de 0,8 à 1,2 (le deuxième composant/le premier composant).

**3.** Etoffe non tissée constituée de la fibre conjuguée frisée selon les revendications 1 ou 2, où la fibre conjuguée frisée formant l'étoffe non tissée possède au moins deux crêtes de points de fusion pour la fibre conjuguée frisée, telles que déterminées par DSC lors de la première passe, et la zone pour la crête du point de fusion le plus bas n'est pas plus petite que la zone pour chacune des autres crêtes des points de fusion plus élevés.

**4.** Etoffe non tissée constituée de la fibre conjuguée frisée selon l'une quelconque des revendications 1 à 3, où l'étoffe non tissée est fusionnée thermiquement par un traitement de bosselage.

**5.** Etoffe non tissée constituée de la fibre conjuguée frisée selon la revendication 4, où ledit traitement de bosselage est exécuté sous des conditions d'un pourcentage de zone de bosselage de 5 à 20% et d'une zone unitaire de non bosselage d'au moins 0,5 mm$^2$.

**6.** Etoffe non tissée constituée de la fibre conjuguée frisée selon l'une quelconque des revendications 1 à 5, où l'étoffe non tissée de la fibre conjuguée frisée est une étoffe non tissée obtenue par filage direct produit par un processus de filage direct.

7. Laminé d'étoffe non tissée comprenant une structure à au moins deux couches, dont au moins une est l'étoffe non tissée constituée de la fibre conjuguée frisée selon l'une quelconque des revendications 1 à 6.

8. Laminé d'étoffe non tissée selon la revendication 7, où une pluralité d'étoffes non tissées constituées de ladite fibre conjuguée frisée d'un degré de frisures différent sont laminées.

9. Laminé d'étoffe non tissée selon la revendication 7, où au moins une autre couche formant le laminé est une couche d'une étoffe non tissée soufflée à l'état fondu produite par un processus de soufflage à l'état fondu.

10. Laminé d'étoffe non tissée selon la revendication 7, où au moins une autre couche formant le laminé est une couche de l'étoffe non tissée obtenue par filage direct constituée de microfibres produites par un processus de filage direct.

11. Laminé d'étoffe non tissée selon la revendication 7, où au moins une autre couche formant le laminé est une couche de film perméable à l'air.

12. Couche jetable utilisant l'étoffe non tissée de la fibre conjuguée frisée ou du laminé d'étoffe non tissée selon l'une quelconque des revendications 1 à 11.

13. Serviette hygiénique utilisant l'étoffe non tissée de la fibre conjuguée frisée ou le laminé de l'étoffe non tissée selon l'une quelconque des revendications 1 à 11.

Fig. 1

Fig. 2

Fig. 3

EP 1 369 518 B1

Fig. 4

Heat Absorption

141.5°C  158.2°C  164.8°C

Temperarure [°C]

Fig. 5

Fig. 6

EP 1 369 518 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9078436 A
- JP 11323715 A
- JP 6065849 A
- JP 9024196 A
- WO 00028123 A
- WO 98029586 A
- JP 9059823 A
- JP 8269857 A